Europäisches Patentamt

European Patent Office

Office européen des brevets

(19)

(11) Numéro de publication: **0 055 680**
**B1**

(12) **FASCICULE DE BREVET EUROPEEN**

(45) Date de publication du fascicule du brevet:
21.11.84

(51) Int. Cl.³: **A 61 M 1/03**, B 01 D 13/00

(21) Numéro de dépôt: **81420164.6**

(22) Date de dépôt: **30.10.81**

(54) **Appareil, utilisable comme hémodialyseur, comprenant des plaques munies de nervures ayant des bossages.**

(30) Priorité: **31.12.80 FR 8027982**

(43) Date de publication de la demande:
**07.07.82 Bulletin 82/27**

(45) Mention de la délivrance du brevet:
**21.11.84 Bulletin 84/47**

(84) Etats contractants désignés:
**BE CH DE GB IT LI NL SE**

(56) Documents cités:
**FR - A - 1 545 932**
**FR - A - 2 114 730**
**FR - A - 2 287 933**
**FR - A - 2 305 214**
**FR - A - 2 325 406**
**FR - A - 2 354 116**
**FR - A - 2 400 380**
**FR - A - 2 405 733**
**US - A - 3 907 687**

(73) Titulaire: **HOSPAL INDUSTRIE, 7, Avenue Lionel Terray,
F-69330 Meyzieu (FR)**

(72) Inventeur: **Benattar, Robert, 115, boulevard Yves Farges,
F-69007 Lyon (FR)**
Inventeur: **Cronenberger, Michel,
F-69700 Chassagny-Par-Givors (FR)**

(74) Mandataire: **Vogt, Bernard et al, RHONE-POULENC
RECHERCHES Service Brevets Chimie et Polymères
Centre de Recherches de Saint-Fons B.P. 62,
F-69192 St-Fons Cédex (FR)**

# Description

La présente invention concerne un appareil, utilisable notamment comme rein artificiel à hémodialyse et à ultrafiltration, comprenant un empilement de plaques sur les faces de chacune desquelles se trouvent des nervures. Un tel appareil comprend deux membranes semi-perméables entre deux plaques adjacentes de l'empilement, tandis que les nervures sur lesquelles reposent les membranes se croisent et prennent appui l'une sur l'autre, à travers lesdites membranes intercalées entre les faces en regard desdites plaques.

De tels appareils de ce type sont déjà connus pour la même application, notamment des documents US-A-39 07 687 et FR-A-15 45 932, mais un problème nouveau vient d'apparaître au technicien du fait que les membranes récentes, dont on a amélioré les performances concernant les échanges de matières, c'est-à-dire les échanges dialytiques, ont vu leurs performances d'ultrafiltration croître également. Or, on sait que pour le traitement des malades par hémodialyse il est nécessaire de limiter l'ultrafiltration pendant les séances ou éventuellement pendant des fractions de temps d'une séance. Etant donné que pour des raisons de sécurité, le sang que circule entre les membranes est à une pression supérieure à celle du liquide de dialyse circulant entre les nervures et au contact des plaques, le technicien a observé qu'avec les appareils munis de plaques comprenant des nervures classiques, dont le pas est généralement inférieur à 3 mm, il était impossible avec des membranes récentes à hautes performances de pouvoir limiter l'ultrafiltration comme il le souhaitait, notamment autour de 200 ml/h/m$^2$ (millilitres, par heure et par m$^2$ de surface utile de membrane).

Un but de la présente invention est donc appareil ne présentant pas les inconvénients de l'art antérieur.

Plus spécialement un but de la présente invention est un appareil dans lequel il est possible d'abaisser les débits d'ultrafiltration á de faibles valeurs tout en ayant de hautes performances dialytiques.

Un autre but de la présente invention est un appareil dans lequel le sang circule entre deux membranes semi-perméables à hautes performances d'ultrafiltration, à une pression supérieure à celle du liquide de dialyse, et par lequel il est possible d'obtenir de faibles débits d'ultrafiltration, de l'ordre de 200 ml/h/m$^2$, et même moins, tout en ayant de bonnes performances dialytiques.

Un autre but de la présente invention est un appareil muni de membranes semi-perméables à haute perméabilité en ultrafiltration et qui offre un faible volume pour le sang.

Un autre but de la présente invention est un appareil dans lequel l'épaisseur du »film sang« entre les membranes varie périodiquement, ce qui améliore les échanges (transferts) dialytiques.

Un autre but de la présente invention est un appareil dans lequel la section de passage du sang circulant entre les membranes varie périodiquement par rapport à sa direction générale d'avancement, les membranes étant constamment supportées par les nervures.

Il a maintenant été trouvé et c'est ce qui fait l'objet de la présente invention un appareil utilisable notamment comme rein artificiel, comprenat un empilement de plaques ayant chacune sur chacune de leurs deux faces principales une cuvette comprenant des nervures rectilagnes ayant sensiblement la même orientation, les nervures d'une face d'une plaque se croisant avec les nervures de la face en regard de la plaque adjacente, ledit empilement comprenant deux membranes intercalées entre lesdites faces en regard les nervures correspondantes desdites faces en regard de deux plaques (1) adjacentes étant en appuè mutuel à travers les membranes, par l'intermédiaire de bossages (14) de hauteur maximale H par rapport au fond de la cuvette et de longueur 1 prévus sur les nervures (2) d'au moins une desdites faces, le rapport l/L étant compris entre 0,1 et 0,3 avec L représentant soit la longueur d'une nervure, soit la distance entre deux bossages successifs d'une même nervure.

La description d'un appareil selon la présente invention sera mieux comprise à l'aide des figures ci-jointes que illustrent de façon schématique, à titres d'exemples non limitatifs, des modes de réalisation particuliers des nervures des plaques d'un appareil.

La figure 1 représente partiellement un mode de réalisation d'une plaque munie de nervures selon la présente invention.

La figure 2 est une section partielle selon II-II de la figure 1.

La figure 3 est une coupe partielle selon III-III de la figure 1.

La figure 4 est une section selon IV-IV de la figure 1.

La figure 5 est une coupe selon V-V de la figure 1 montrant un mode de réalisation des nervures selon la présente invention.

La figure 6 est une vue en perspective d'une nervure selon la figure 5.

La figure 7 est une vue en coupe prise de la même façon que la coupe de la figure 5 et représentant un autre mode de réalisation des nervures selon la présente invention.

La figure 8 est une vue en perspective de la nervure selon la figure 7.

La figure 9 est une variante de disposition des nervures selon la présente invention.

La figure 10 est une autre variante de disposition des nervures selon la présente invention.

La figure 11 est une représentation agrandie et plus détaillée de la partie comprise dans le polygone A de la plaque représentée figure1.

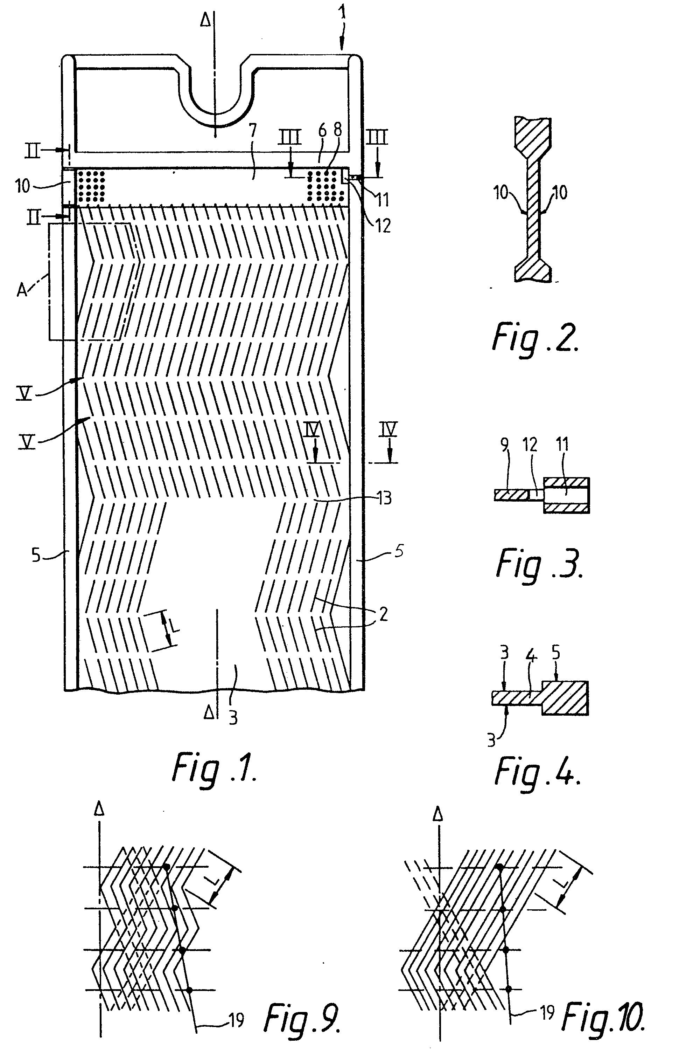

La figure 1 représente partiellement un mode de réalisation d'une plaque (1) d'un appareil qui comprend des nervures (2) selon la présente invention. Cette plaque (1) de forme générale allongée comprend un axe longitudinal $\Delta$ et une cuvette (3) sur chacune de ses faces principales, c'est-à-dire les deux faces ayant la plus grande surface. Ces deux cuvettes disposées dos-à-dos sont séparées par une paroi mince (4) comme cela est représenté plus clairement figure 4. Sur son pourtour cette plaque (1) comprend des bords longitudinaux (5) et transversaux (6). Dans la figure 1 seule une partie de la plaque (1) a été représentée, car une telle plaque est avantageusement symétrique par rapport à un plan médian perpendiculaire à son axe longitudinal $\Delta$. La plaque (1) comprend sur chaque face un zone de répartition (7) à chacune de ses extrémités, chaque zone (7) comprenant par exemple des picots (8) ou petits points en relief, sur lesquels repose la membrane adjacente à cette face de la plaque. Les deux zones (7) de répartition d'une extrémité d'une plaque sont disposées dos-à-dos et séparées entre elles par une paroi mince (9) comme cela est représenté figure 3. Sur chaque plaque telle que celle représentée figure 1, un bord longitudinal (5) comprend deux rétrécissements (10) à proximité de chaque zone (7) de répartition vers chaque extrémité de plaque, comme cela est mieux représenté par la figure 2. D'autre part l'autre bord longitudinal (5) comprend, vers chaque zone (7) de répartition de chaque extrémité de la plaque (1) un canal interne (11) débouchant dans un trou (12) prévu dans la paroi mince (9) séparant les zones de répartition (7) disposées dos-à-dos; ceci est mieux représenté figure 3.

Chaque plaque (1) telle que celle précédemment décrite comprend une membrane couvrant chacune de ses faces, ladite membrane étant retournée autour du bord longitudinal (5) ayant les rétrécissements (10). La membrane de chaque plaque forme ainsi un U dont le coude recouvre complètement le bord longitudinal (5) ayant des rétrécissements (10), tandis que les branches du U couvrent chaque face de la plaque condisérée.

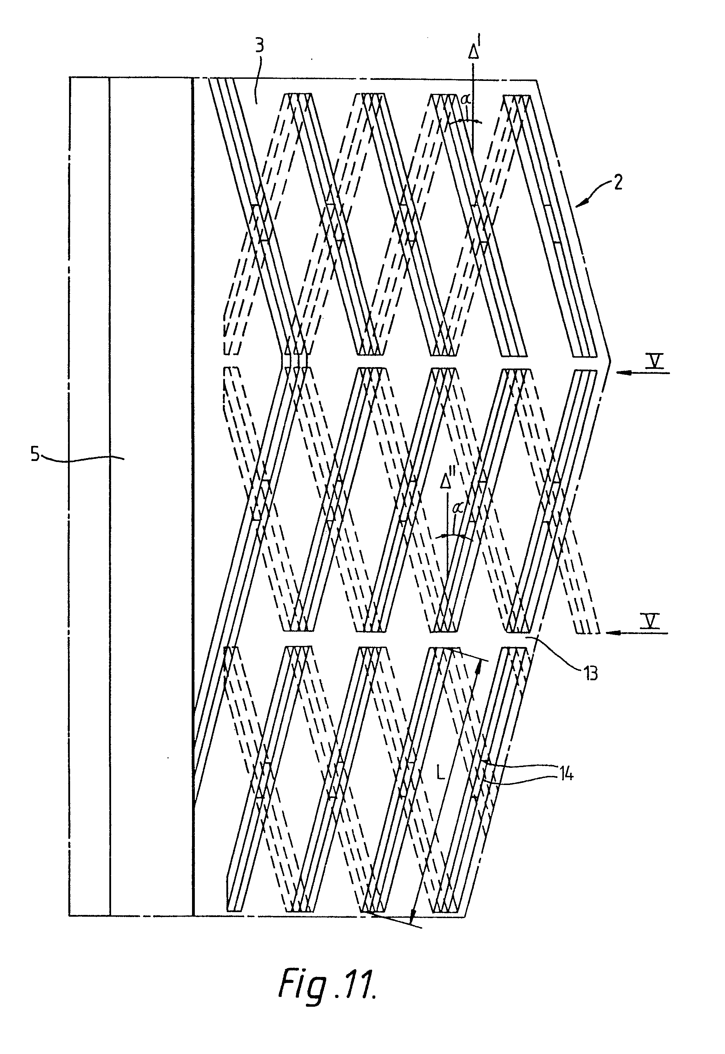

Chaque plaque (1) comprend des nervures (2) sur chacune de ses faces, la base des nervures (2) reposant sur le fond des cuvettes (3). Chaque nervure (2) de chaque face a un profil en zig-zag, comme représenté figure 1 ou figure 11. Avantageusement chaque nervure (2) fait un angle $\alpha$ compris, en valeur absolue, entre 10 et 45 degrés par rapport à l'axe longitudinal ($\Delta$) de la plaque. Comme cela est représenté figure 11, lorsque les nervures (2) d'une face font un angle $\alpha$ avec l'axe longitudinal $\Delta$ de la plaque, les nervures de l'autre face de la plaque considérée font avantageusement un angle $(-\alpha)$ avec le même axe longitudinal, et vice versa, les droites $\Delta'$ et $\Delta''$ représentant des parallèles à l'axe longitudinal $\Delta$ représenté figure 1. Ainsi les nervures de chaque face sont parallèles entre elles et font un angle $\alpha$ ou $-\alpha$ par rapport à l'axe longitudinal $\Delta$ de la plaque.

Dans le mode de réalisation de la plaque représentée figures 1 et 11, nous trouvons des canaux transversaux (13) perpendiculaires à l'axe longitudinal $\Delta$ de la plaque, ces canaux (13) coupant les nervures sensiblement jusqu'au fond de chaque cuvette (3) et ayant pour but de favoriser la répartition et la distribution du sang circulant entre les membranes supportées sur toute la longueur des nervures (2). Ces canaux transversaux (13) sont avantageux, mais ne sont pas indispensables pour une plaque ayant des nervures selon la présente invention.

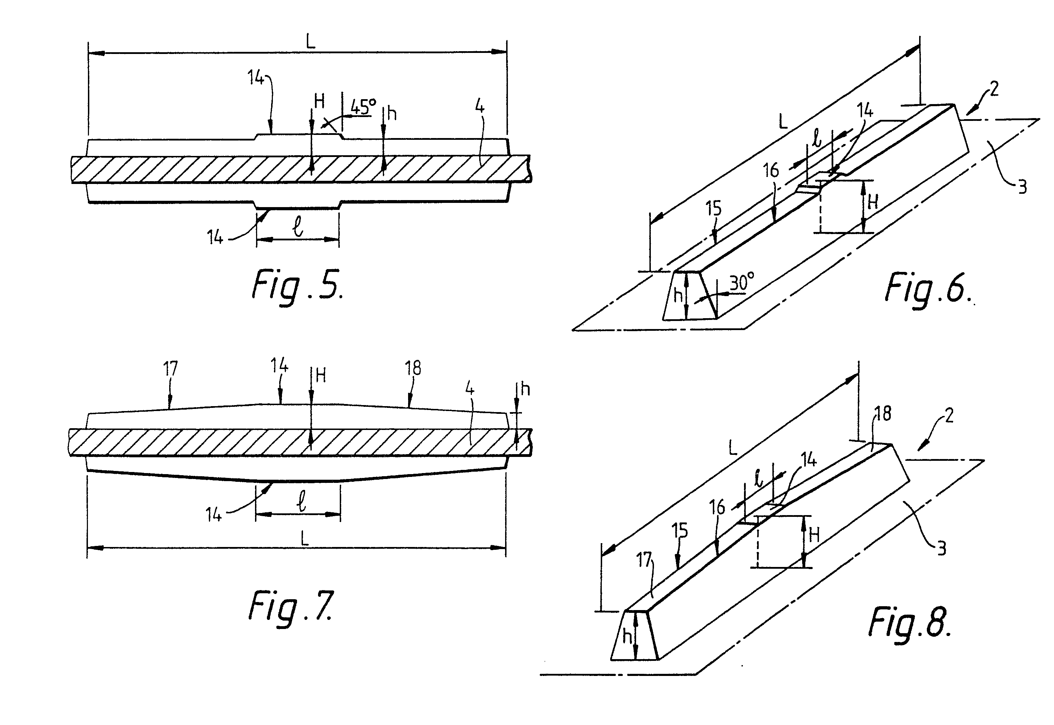

Les figures 5 et 6 représentent un mode de réalisation préférentiel des nervures (2) des plaques de l'appareil selon la présente invention. Chaque nervure (2) de chaque face de la plaque (1) comprend sur une longueur L, pour lequel la hauteur H de la nervure est maximale pa rapport au fond de la cuvette (3) contenant ladite nervure (2), tandis que chaque nervure (2), de part et d'autre de ce bossage (14) de hauteur maximale H, est de hauteur h constante, inférieure à H, la hauteur h étant mesurée par rapport au fond de la cuvette (3), le rapport l/L étant compris généralement entre 0,1 et 0,3 et de préférence entre 0,15 et 0,25. La longueur L est généralement comprise entre 5 et 15 mm et, dans le cas de la plaque représentée figures 1 et 11, correspond à la longueur de chaque nervure (2) comprise entre deux canaux transversaux (13). La longueur L correspond à la distance entre deux bossages de hauteur maximale H, sur une même nervure rectiligne d'angle $\alpha$ ou $-\alpha$. La section d'une nervure montre qu'elle a avantageusement une section de forme trapézoïdale (voir figure 6), mais les arêtes supérieures (15 et 16) sont généralement arrondies pour éviter de traumatiser la membrane reposant sur ladite nervure. De même le bossage (14) de hauteur maximale H se raccorde aux deux parties adjacentes de la nervure de hauteur h en faisant avantageusement un angle de 45 degrés et les arêtes du bossage (14) sont avantageusement arrondies. En ce qui concerne la différence des hauteurs H-h pour une nervure telle que celle représentée figure 6, elle est comprise entre 50 et 100 microns, la hauteur h étant elle-même comprise entre 0,2 et 0,6 mm. D'autre part dans la plaque telle que celle représentée figures 1 et 11, la hauteur des bords latéraux (5) et transversaux (6) par rapport au fond de cuvette (3) correspond à la hauteur du bossage (14) de hauteur maximale H par rapport au fond de cuvette (3).

Ainsi dans un appareil ayant des plaques munies de nervures telles que celles décrites ciavant, deux plaques (1) successives viennent en appui mutuel à travers les deux membranes disposées entre elles, par les bossages (14) de hauteur maximale H des nervures (2) se faisant face et se croisant entre elles. La figure 11 que représente les nervures (2) d'une face d'une plaque et les nervures (2) de l'autre face de la même plaque, permet de se rendre compte de ceci, en admettant maintenant que les nervures (2) dessinéess en traits pleins représentent les nervures d'une plaque et que les nervures en traits pointillés représentent les nervures de la face en regard de la plaque adjacente.

Dans un appareil muni de plaques (1) ayant des nervures (2) telles que celles précédemment décrites et représentées plus particulièrement figures 5, 6 et 11, le sang pénètre dans la zone (7) de répartition, entre les deux membranes de deux plaques successives, grâce aux rétrécissements (10), puis il suit entre chaque membrane un trajet correspondant globalement à l'axe longitudinal Δ de la plaque pour ressortir à l'autre extrémité des plaques grâce aux rétrécissements (10) situés dans l'autre zone (7) de répartition. Le liquide de dialyse pénètre dans une zone (7) de répartition de chaque plaque grâce à un canal interne (11), puis il circule au contact du fond des cuvettes (3) de chaque plaque, canalisé à entre les nervures (2) et en suivant leur disposition en zig-zag, en ayant globalement un trajet correspondant à celui de l'axe longitudinal Δ de chaque plaque. Le liquide de dialyse arrive alors à l'autre zone (9) de répartition et sort par les canaux internes (11) des plaques. Le liquide de dialyse suit avantageusement un trajet à contre-courant de celui du sang.

A titre de résultats comparatifs, des membranes à hautes performances en ultrafiltration commercialisées sous l'appelation AN 69, obtenues à partir d'un collodion comprenant un copolymère d'acrylonitrile et de méthallylsulfonate de sodium (le pourcentage en poids étant respectivement de 91 et de 9%), ont été montées sur deux appareils. L'un des appareils correspondait exactement à l'appareil ayant des plaques (1) et des nervures (2) telles que celles représentées figures 1, 2, 3, 4 et 11. Dans cet appareil la valeur absolue de l'angle α des nervures (2) avec l'axe longitudinal Δ de la plaque était de 15 degrés, les nervures (2) de chaque face étaient disposées en zig-zag et la longueur L correspondait à 9,25 mm, tandis que 1 correspondait à 2 mm. La hauteur H des bossages (14) était de 0,5 mm et la différence H-h était de 80 microns. La surface de chaque face d'une plaque ayant des nervures était de 6,65 cm × 26,1 cm, le pas des nervures étant de 2,5 mm et la largeur des nervures du niveau des bossages (14) de hauteur maximale H était de 0,2 mm, l'angle des faces latérales des nervures (2) avec une droite perpendiculaire au fond des cuvettes étant de 30 degrés. Le deuxième appareil présentait toutes les particularités et dimensions du premier appareil, sauf en ce que concerne les nervures de chaque face des plaques que étaient toutes de hauteur rigoureusement constante et égale à 0,5 mm par rapport au fond de la cuvette. En utilisant les deux appareils, chacun d'eux ayant la même surface de membrane (≃1 m²), dans les mêmes conditions, c'est-à-dire une circulation du sang de 200 ml/mm et du liquide de dialyse à 500 ml/mm, avec l'appareil ayant les nervures présentant un bossage (14) de hauteur maximale H il a été possible de limiter le débit d'ultrafiltration à 200 ml/h/m² tandis qu'avec le deuxième appareil ayant des nervures de hauteur rigoureusement constante sur toute leur longueur, le débit d'ultrafiltration minimum a été supérieur à 1 l/h/m², les deux appareils ayant subi une force de serrage égale de l'empilement. Quant aux performances dialytiques elles ont été du même ordre pur les deux appareils.

Les figures 7 et 8 représentent un autre mode de réalisation des nervures (2) selon la présente invention. Ces nervures (2), de même que celles des figures 5 et 6 précédemment décrites font un angle α ou −α avec l'axe longitudinal Δ d'une plaque et comprennent un bossage (14) de hauteur maximale H et de longueur l. Ces nervures (2) selon des figures 7 et 8 se distinguent de celles selon les figures 5 et 6 par le fait qu'elles comprennent de part et d'autre du bossage (14), sur une longueur L de nervure considérée, deux zones (17 et 18) de hauteur décroissante, ces zones (17 et 18) étant avantageusement réparties de façon symétrique par rapport au bossage (14). Le rapport l/L est compris généralement entre 0,1 et 0,3 et de préférence entre 0,15 et 0,25. La longueur L est généralement comprise entre 5 et 15 mm et correspond à la longueur d'une nervure (2) comprise entre deux canaux transversaux (13) dans le cas de la plaque selon les figures 1 ou 11. La section d'une nervure représentée figure 8 montre qu'elle a avantageusement une forme trapézoïdale, mais les arêtes (15 et 16) sont généralement arrondies pour éviter de traumatiser la membrane reposant sur ladite nervure. En ce que concerne la différence des hauteurs H-h, elle est avantageusement comprise entre 50 et 200 microns, la hauteur h étant elle-même comprise entre 0,3 et 0,6 mm représentant la hauteur minimale de la nervure sur la longueur L considérée. Les figures 1, 2, 3, 4 et 11 peuvent être considéré comme représentant une plaque (1) munie de nervures telles que celles décrites ci-avant en se référant aux figures 7 et 8. Ainsi les nervures qui se croisent des faces en regard de deux plaques successives sont en appui mutuel à travers les membranes, par des bossages (14) de hauteur maximale H et de longueur l.

Comme cela a déjà été mentionné lors de la description de la plaque selon les figures 1, 2, 3, 4 et 11 munie de nervures selon les figures 5 et 6 ou 7 et 8, il n'est pas impératif, mais seulement avantageux, que les nervures soient intersectées par des canaux transversaux (13) perpendiculaires à l'axe longitudinal Δ de la plaque. Dans la plaque représentée figures 1 et 11 chaque nervure, sur sensiblement toute sa longueur comprise entre les deux zones (7) de répartition, est coupée par quatre canaux transversaux (13) lorsqu'elle fait un angle α avec l'axe longitudinal Δ de la plaque, et elle est également coupée par quatre canaux (13) transversaux lorsqu'elle fait un angle −α avec le même axe Δ. Cependant chaque nervure d'angle α peut être comprise entre seulement deux canaux transversaux (13) et suivie immédiatment par une nervure d'angle −α, elle-même comprise seulement entre deux canaux transversaux (13). Les figures 9 et 10 montrent des nervures non intersectées par des canaux transversaux, les lignes (19), perpendiculaires à l'axe longitudinal $\Delta$ de la plaque, représentant les endroits où les nervures des faces opposées de deux plaques successives sont en contact. Dans la figure 9 les nervures continues sont d'angle $\alpha$ (par rapport à $\Delta$) sur une longueur L, puis d'angle $-\alpha$ sur une longueur L également. Dans la figure 10 les nervures continues font un angle $\alpha$ sur sensiblement trois fois la longueur L, puis font un angle $-\alpha$ sur trois fois la même longueur L.

De nombreuses variantes de réalisation de l'appareil selon la présente invention sont à la portée du technicien. Ainsi il est, par exemple, possible qu'entre deux plaques successives la face d'une plaque ait des nervures selon la figure 6, tandis que la face de l'autre plaque en regard a des nervures selon la figure 8. Il est également possible que dans l'appareil selon la présente invention, entre deux plaques consécutives, les faces en regard soient en appui mutuel (par l'intermédiaire des membranes) dans les lignes d'appui (19), par un bossage (14) de hauteur maximale H et de longueur I prévue seulement sur une des nervures, cette dernière nervure ayant alors la forme de celle représentée figure 6 ou de celle représentée figure 8. Ce dernier mode de réalisation des nervures entre les faces en regard de deux plaques successives entraîne de nombreuses variantes, dont notamment celles décrites ci-après:

— un appareil dans lequel entre deux plaques successives les faces en regard sont en appui mutuel dans les lignes d'appui (19) par des bossages (14) de hauteur maximale H prévues seulement sur les nervures de l'une des deux faces,

— un appareil dans lequel entre deux plaques successives les faces en regard sont en appui mutuel selon les lignes d'appui (19), par des bossages (14) de hauteur maximale H prévues sur les nervures de l'une des faces pour la ligne d'appui (19), puis sur les nervures de l'autre face pour la ligne (19) suivante d'appui et ainsi de suite,

— un appareil dans lequel entre deux plaques successives les faces en regard sont en appui mutuel dans chaque ligne (19) d'appui considérée, par un bossage (14) de hauteur maximale H prévue sur la nervure d'une face, puis par un bossage (14) de hauteur maximale H prévue sur la nervure de l'autre face pour le point d'appui suivant de la même ligne (19) considérée, et ainsi de suite, en alternace, sur chaque ligne (19).

Ainsi on ne sort pas de l'appareil selon la présente invention à partir du moment où entre deux plaques successives les nervures des faces en regard se croisent et entrent en appui mutuel (par l'intermédiaire des membranes) par au moins un bossage (14), de hauter maximale H et de longueur I, prévue sur au moins une des nervures de l'une desdites faces. Généralement le rapport I/L est compris entre 0,1 et 0,3 et de préférence entre 0,15 et 0,25, L représentant soit la longueur totale d'une nervure d'angle $\alpha$ en valeur absolue, soit la distance entre deux points d'appui mutuel des nervures sur une même nervure rectiligne. La longueur L est généralement comprise entre 5 et 15 mm.

Il est à noter d'autre part que dans un appareil selon la présente invention les nervures des faces en regard de drux plaques consécutives se croisent, mais qu'éventuellement les nervures d'une face peuvent ne pas faire le même angle (en valeur absolue), par rapport à l'axe longitudinal $\Delta$ des plaques, que les nervures de la face en regard de la plaque adjacente, aux points d'appui mutuel considérés. De même les points d'appui mutuel des nervures de deux plaques consécutives ne sont pas obligatoirement sur des droites (19) perpendiculaires à l'axe longitudinal $\Delta$ des plaques.

Bien que l'appareil selon la présente invention ait été décrit jusqu'ici de façon préférentielle en ayant qu'un seul type de plaque dont les nervures de chaque face sont positionnées de façon telle qu'elles se croisent lorsque ces plaques sont empilées, il est bien sur possible de prévoir deux types différents de plaques pour arriver au même résultat.

En ce qui concerne l'utilisation de l'appareil selon la présente invention, son mode de réalisation des nervures permet en plus de l'application à l'hémodialyse, l'application notamment en tant que rein à hémofiltration ou en tant qu'appareil de plasmaphérèse.

**Revendications**

1. Appareil utilisable notamment comme rein artificiel, comprenant un empilement de plaques (1) ayant sur des faces principales en regard une cuvette (3) comprenant des nervures (2) ayant sensiblement la même orientation, les nervures d'une face d'une plaque se croisant avec les nervures de la face en regard de la plaque adjacente, ledit empilement comprenant deux membranes intercalées entre lesdites faces en regard chaque nervure d'une face d'une plaque exerçant une pression à travers lesdites membranes sur une nervure (2) correspondante de la face en regard, caractérisé en ce que les plaques compartent des nervures sur chaque face, en ce que des bossages (14) de hauteur maximale H, et de longueur I sont prévus sur les nervures (2) d'au moins une desdites faces en regard et en ce que le rapport I/L est compris entre 0,1 et 0,3, L représentant soit la longueur d'une nervure rectiligne (2) n'ayant qu'un seul desdits bossages (14) sur sa longueur soit la distance entre deux bossages (14) de hauteur maximale (H) par rapport au fond de la cuvette se succédant sur une nervure rectiligne lorsque les nervures de deux faces en regard pincent les membranes par l'intermédiaire de plus d'un bossage (14) sur une longueur rectiligne de nervure.

2. Appareil selon la revendication 1, caractérisé en ce que les nervures de chaque cuvette (3) des faces en regard de deux plaques (1) adjacentes sont disposées en zig-zag en faisant un angle $\alpha$, en valeur absolue, par rapport à l'axe longitudinal $\Delta$ des plaques, cet angle $\alpha$ étant compris entre 10 et 45 degrés.

3. Appareil selon l'une quelconque des revendications précédentes, caractérisé en ce que les nervures (2) des cuvettes (3) des faces en regard de deux plaques (1) adjacentes comprennent sur chaque longueur L de nervure considérée un desdits bossages (14) de longueur I et de hauteur maximale H par rapport au fond de la cuvette (3) les contenant, les nervures (2) des faces en regard 'de deux plaques adjacentes pinçant lesdites membranes par les bossages (14) de longueur I de chacune d'elles, le rapport I/L étant compris entre 0,1 et 0,3.

4. Appareil selon la revendication 3, caractérisé en ce que les nervures des cuvettes (3) des faces en regard de deux plaques adjacentes ont, par rapport au fond de la cuvette, une hauteur constante h de part et d'autre d'un bossage (14) sur chaque longueur L de nervure considérée, lesdit bossage (14) ayant une longueur I et une hauteur maximale H par rapport au fond de la cuvette (3) contenant les nervures.

5. Appareil selon la revendication 4, caractérisé en ce que pour chaque nervure (2) des faces en regard de deux plaques (1) adjacentes la différence H-h est comprise entre 50 et 100 microns et en ce que L est compris entre 5 et 15 mm.

6. Appareil selon la revendication 3, caractérisé en ce que les nervures (2) comprennent un bossage (14) de longueur I et de hauteur maximale H par rapport au fond de la cuvette et comprennent de part et d'autre de ce bossage (14), sur une longueur L de nervure considérée, deux zones (17 et 18) de hauteur décroissante à partir de ce bossage (14) de hauteur maximale.

7. Appareil selon la revendication 6, caractérisé en ce que la différence H-h est comprise entre 50 et 200 microns, h représentant la hauteur minimale de la nervure (2) par rapport au fond de cuvette (3) la contenant, pour la longueur L de nervure considérée, L étant compris entre 5 et 15 mm.

8. Appareil selon l'une quelconque des revendications précédentes, caractérisé en ce que les nervures (2) des faces en regard de deux plaques (1) adjacentes sont coupées par des canaux (13) perpendiculaires à l'axe longitudinal de la laque considérée, lesdits canaux étant espacés l'un de l'autre de façon telle qu'ils permettent d'obtenir des portions de nervures de longueur L, le bossage (14) de longueur I et de hauteur maximale H étant au milieu de chaque portion de nervure de longueur L.

9. Appareil selon l'une quelconque des revendications précédentes, caractérise en ce qu'il résulte de l'empilement d'un seul type de plaques (1) ayant des nervures (2) sur chacune de leurs faces.

**Patentansprüche**

1. Vorrichtung zur Verwendung als künstliche Niere, mit einem Stapel aus Platten (1), die auf einander zugewandten Seiten eine Wanne (3) mit Rippen (2) von im wesentlichen gleicher Richtung aufweisen, wobei die Rippen einer Plattenseite sich mit Rippen der gegenüberliegenden Seite der benachbarten Platte kreuzen, wobei der Stapel zwischen den einander zugewandten Seiten zwei Membranen aufweist, wobei jede Rippe einer Plattenseite durch die Membranen hindurch einen Druck auf eine entsprechende Rippe (2) der gegenüberliegenden Seite ausübt, dadurch gekennzeichnet, daß die Platten auf jeder Seite Rippen aufweisen,
daß an den Rippen (2) von wenigstens einer der einander zugewandten Seitenvorsprünge (14) mit einer maximalen Höhe (H) und einer Länge I vorgesehen sind, und
daß das Verhältnis I/L 0,1 bis 0,3 beträgt, wobei L entweder die Länge einer geraden Rippe (2) mit einem einzigen der Vorsprünge (14) auf ihrer Länge oder den Abstand zwischen zwei Vorsprüngen (14) mit maximaler Höhe (H) gegenüber dem Boden der Wanne darstellt, die auf einer geraden Rippe aufeinander folgen, wenn die Rippen zweier einander zugewandter Seiten die Membranen durch mehr als einen Vorsprung (14) auf einer geraden Rippenlänge klemmen.

2. Vorrichtung nach Anspruch 1, dadurch gekennzeichnet, daß die Rippen jeder Wanne von einander zugewandten Seiten zweier benachbarter Platten (1) zickzackförmig angeordnet sind unter Bildung eines Winkels $\alpha$ als Absolutwert gegenüber der Längsachse $\Delta$ der Platten, wobei dieser Winkel $\alpha$ im allgemeinen 10 bis 45° beträgt.

3. Vorrichtung nach einem der vorhergehenden Ansprüche, dadurch gekennzeichnet, daß die Rippen (2) der Wannen (3) der einander zugewandten Seiten zweier benachbarter Platten (1) auf jeder betrachteten Rippenlänge (L) einen der Vorsprünge (14) mit der Länge (I) und der maximalen Höhe (H) gegenüber dem Boden der sie enthaltenden Wanne (3) aufweisen, wobei die Rippen (2) der einander zugewandten Seiten zweier benachbarter Platten die Membranen durch jeden ihrer Vorsprünge (14) von der Länge I klemmen, wobei das Verhältnis I/L 0,1 bis 0,3 beträgt.

4. Vorrichtung nach Anspruch 3, dadurch gekennzeichnet, daß die Wannen (3) der einander zugewandten Seiten zweier benachbarter Platten gegenüber dem Boden der Wanne eine konstante Höhe h beiderseits eines Vorsprungs (14) auf jeder betrachteten Rippenlänge L aufweisen, wobei der Vorsprung (14) eine Länge I und gegenüber dem Boden der die Rippen enthaltenden Wanne (3) eine maximale Höhe H aufweist.

5. Vorrichtung nach Anspruch 4, dadurch gekennzeichnet, daß für jede Rippe (2) der einander zugewandten Seiten zweier benachbarter Platten (1) die Differenz H-h 50 bis 100 μ beträgt, und daß L 5 bis 15 mm beträgt.

6. Vorrichtung nach Anspruch 3, dadurch gekennzeichnet, daß die Rippen (2) einen Vorsprung (14) mit der Länge l und der Höhe H gegenüber dem Boden der Wanne aufweisen und beiderseits dieses Vorsprungs (14) auf einer betrachteten Rippenlänge L zwei Zonen (17 und 18) von abnehmender Höhe, ausgehend von diesem Vorsprung (14) von maximaler Höhe aufweisen.

7. Vorrichtung nach Anspruch 6, dadurch gekennzeichnet, daß die Differenz H-h 50 bis 200 μ beträgt, wobei die minimale Höhe der Rippe (2) gegenüber dem Boden der sie enthaltenden Wanne (3) für die Länge L der betrachteten Rippe darstellt, wobei L 5 bis 15 mm beträgt.

8. Vorrichtung nach einem der vorhergehenden Ansprüche, dadurch gekennzeichnet, daß die Rippen (2) der einander zugewandten Seiten zweier benachbarter Platten (1) von zur Längsachse der betrachteten Platte senkrechten Kanälen (13) geschnitten werden, wobei die Kanäle derart voneinander beabstandet sind, daß sie Rippenteile mit der Länge L ermöglichen, wobei der Vorsprung (14) mit der Länge l und mit der maximalen Höhe (H) in der Mitte jedes Rippenteils mit der Länge L liegt.

9. Vorrichtung nach einem der vorhergehenden Ansprüche, dadurch gekennzeichnet, daß sie aus einem Stapel aus einer einzigen Art von Platten (1) mit Rippen (2) auf jeder ihrer Seiten besteht.

## Claims

1. Apparatus capable of being used particularly as an artificial kidney, incorporating a stack of plates (1) having on their main facing sides a trough (3) incorporating ribs (2) having substantially the same direction, the ribs on one side of a plate intercrossing with the ribs on the facing side of the adjacent plate, the said stack incorporating two membranes inserted between the said facing sides, each rib on one side of a plate exerting a pressure through the said membranes on a corresponding rib (2) of the facing side, characterised in that the plates incorporate ribs on each side, that projections (14) with a maximum height H and length l are provided on the ribs (2) of at least one of the said facing sides and that the ratio l/L is between 0.1 and 0.3, L denoting either the length of a rectilinear rib (2) having only one of the said projections (14) in its length, or the distance between two projections (14) with a maximum height (H) relative to the bottom of the trough following each other on a rectilinear rib when the ribs of two facing sides clamp the membranes through the intermediacy of more than one projection (14) on a rectilinear length of a rib.

2. Apparatus according to Claim 1, characterised in that the ribs of each trough (3) on the facing sides of two adjacent plates (1) are arranged in a zigzag, forming an angle $\alpha$, in absolute value, relative to the longitudinal axis $\Delta$ of the plates, this angle $\alpha$ being generally between 10 and 45 degrees.

3. Apparatus according to either one of the preceding claims, characterised in that the ribs (2) of the troughs (3) of the facing sides of two adjacent pates (1) incorporate in each length L of the rib in question one of the said projections (14) of a length l and maximum height H relative to the bottom of the trough (3) containing them, the ribs (2) of the facing sides of two adjacent plates clamping the said membranes by the projections (14) of length l of each of them, the ratio l/L being between 0.1 and 0.3.

4. Apparatus according to Claims 3, characterised in that the ribs of the troughs (3) of the facing sides of two adjacent plates have, relative to the bottom of the trough, a constant height h on either side of a projection (14) on each length L of the rib in question, the said projection (14) having a length l and a maximum height H relative to the bottom of the trough (3) containing the ribs.

5. Apparatus according to Claim 4, characterised in that, for each rib (2) of the facing sides of two adjacent plates (1), the difference H-h is between 50 and 100 microns and L is between 5 and 15 mm.

6. Apparatus according to Claim 3, characterised in that the ribs (2) incorporate a projection (14) of length l and maximum height H relative to the bottom of the trough and incorporate, on either side of this projection (14), on a length L of the rib in question, two zones (17 and 18) of a height which diminishes starting at this projection (14) of maximum height.

7. Apparatus according to Claim 6, characterised in that the difference H-h is between 50 and 200 microns, h denoting the minimum height of the rib (2) relative to the bottom of the trough (3) containing it, for the length L of the rib in question, L being between 5 and 15 mm.

8. Apparatus according to any one of the preceding claims, characterised in that the ribs (2) of the facing sides of two adjacent plates (1) are cut by channels (13) which are perpendicular to the longitudinal axis of the plate in question, the said channels being spaced relative to each other so that they make it possible to obtain rib sections of length L, the projection (14) of a length l and maximum height H being in the middle of each rib section of a length L.

9. Apparatus according to any one of the preceding claims, characterised in that it is formed by the stacking of a single kind of plate (1) having ribs (2) on each of its sides.

0 055 680

Fig .1.

Fig .2.

Fig .3.

Fig .4.

Fig .9.

Fig .10.

9

Fig.5.

Fig.6.

Fig.7.

Fig.8.

0 055 680

Fig.11.